Europäisches Patentamt

European Patent Office

Office européen des brevets

(11) Publication number: **0 123 139**
**B1**

(12) **EUROPEAN PATENT SPECIFICATION**

(45) Date of publication of patent specification: **12.07.89**

(21) Application number: **84103131.3**

(22) Date of filing: **21.03.84**

(51) Int. Cl.⁴: **F 02 B 27/02**

(54) Intake passage for internal combustion engine.

(30) Priority: **22.03.83 JP 48344/83**

(43) Date of publication of application:
**31.10.84 Bulletin 84/44**

(45) Publication of the grant of the patent:
**12.07.89 Bulletin 89/28**

(84) Designated Contracting States:
**DE FR GB**

(56) References cited:
**US-A-2 835 235**

(73) Proprietor: **Mazda Motor Corporation**
**No. 3-1, Shinchi Fuchu-cho**
**Aki-gun Hiroshima-ken (JP)**

(72) Inventor: **Toshikuni, Yada**
**c/o Toyo Kogyo Co., Ltd. No. 3-1, Shinchi**
**Fuchu-cho Aki-gun Hiroshima-ken (JP)**

(74) Representative: **Kador . Klunker . Schmitt-Nilson**
**. Hirsch**
**Corneliusstrasse 15**
**D-8000 München 5 (DE)**

Courier Press, Leamington Spa, England.

## Description

### Background of the invention
### Field of the invention

This invention relates to an intake passage for an internal combustion engine the length of which is made variable according to the condition of the engine, and more particularly to an intake passage for an internal combustion engine in which the length of the intake passage is varied so as to enhance the output power of the engine by making the natural frequency of the intake system synchronized with the frequency of the pressure change caused by the reciprocal motion of the piston in the cylinder.

### Description of the prior art

In an internal combustion engine, as the piston moves up and down in the cylinder, a pressure wave is created in the intake passage and transmits through the intake passage up to the surge tank, where it is reflected and then returns to the cylinder. This is repeated and accordingly results in a periodical pressure change in the intake passage at a frequency determined by the condition of the engine such as the engine speed. On the other hand, every intake system of an engine has its natural frequency determined by the volume of the intake passage and the cylinder. It is known that the output power of an engine can be enhanced by making the above mentioned both frequencies synchronized with each other.

In order to obtain a high output power of an engine over a wide range of engine speed, it is known to make the length of the intake passage variable according to the engine speed. This type of the intake passage is disclosed in US—A—2,835,235 which comprises a stationary elongated member formed by the axial sequence of spaced C-shaped casings and cylindrical sleeve portions interconnected therebetween. The equal diameters of said sleeve portions are substantially smaller than the equal widths of said casings. Each C-shaped casing extends into an outlet tube which is vice versa connected with an associated cylinder. Coaxially with said stationary member there is disposed an elongated rotatable member formed by the axial sequence of spaced spirally shaped hollow drums and cylindrical sleeve portions the latter being fitted within said sleeve portions of said stationary member. The outer surface of each spirally shaped drum is riding on the lower edge of the associated C-shaped casing adjacent to said outlet tube, whereas the radially outer edge of each spirally shaped drum is riding on the inner surface of the associated C-shaped casing thus forming a passage whose length is dependent from the rotational position of the respective drum.

Each interface between a riding edge and an according surface is sealed by a seal fitted in a corresponding groove of the riding edge. Intake air is axially entering into the arrangement of the stationary and the rotatable members and is conducted within said arrangement via the several variable length passages into the engine cylinders.

However, the seal between the rotatable drums and the casings is insufficient since drums and casings are subjected to different thermal expansions due to their close proximity to the engine which is necessary to keep the variable length intake passage compact.

Such leakage of the intake air in the known variable length intake passage will cause a serious problem in the case that an air-flow meter is provided upstream of an engine to control the amount of the fuel injection or a throttle valve is provided upstream an engine. Due to the leakage of the intake air the air-fuel ratio is changed in the former case, while the throttle action is weakened in the latter case.

Moreover in the cited reference the pressure in the outside of the cylindrical body of the rotatable drum is held at the atmospheric pressure, while the intake pressure in the inside thereafter changes. Accordingly the rotatable drum tends to become unstable due to drastic changes in the intake pressure.

The object of the present invention is, accordingly, to provide a variable length intake passage for an internal combustion engine which combines a compact size with a sufficient sealing performance.

This object is solved by the provision of a closed casing for the stationary member which completely surrounded the rotatable member.

The seal between the rotatable member and the closed casing provides sufficient sealing effect to accomplish the effect of a variable length intake passage without deteriorating the air-fuel ratio of fuel injection or the throttle action of a throttle valve provided upstream of the internal combustion engine.

An embodiment of the invention is in the following disclosed with reference to the drawings.

### Brief description of the drawings

Fig. 1 is a block diagram showing an air intake system for an internal combustion engine to which the intake passage in accordance with the present invention is applied;

Fig. 2 is a vertical partial cross-sectional view showing an intake passage connected to an engine in accordance with an embodiment of the present invention;

Fig. 3 is a cross-sectional view taken along the line III—III of Fig. 2;

Fig. 4 is a perspective view showing an intake passage length control member employed in the embodiment shown in Figures 2 and 3, and

Fig. 5 is a partly sectioned side view of the surge tank provided with the intake passage in accordance with the embodiment of the present invention as shown in Figures 2 to 4, which particularly shows means for controlling the length of the intake passage.

### Description of the preferred embodiment

Now the present invention will be described in detail with reference to a preferred embodiment thereof referring to the accompanying drawings.

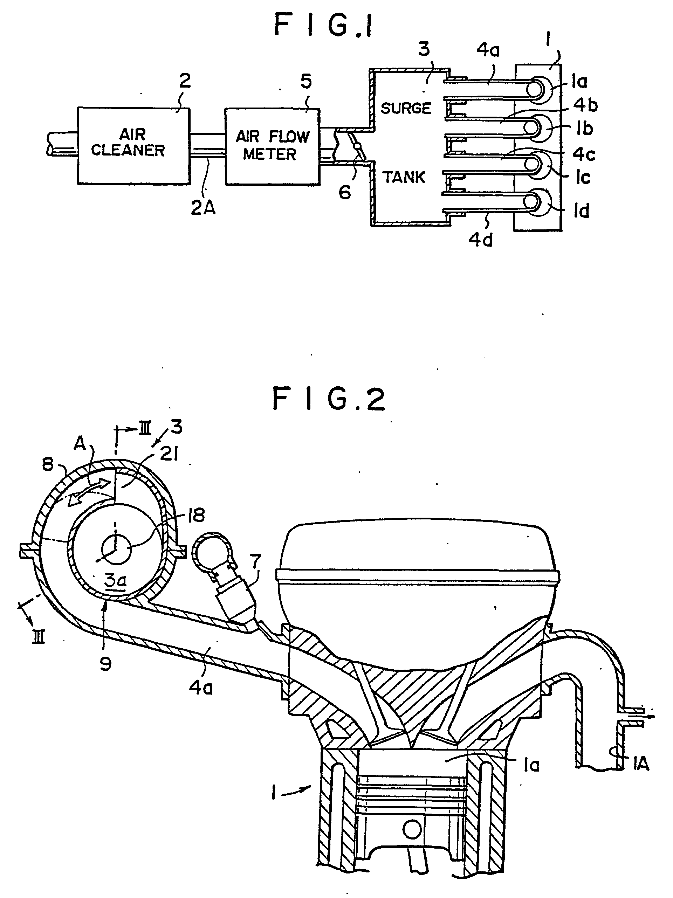

Figure 1 generally shows the intake system in which the intake passage in accordance with the present invention is employed.

Referring to Figure 1, the intake air is introduced into the engine 1, four cylinder engine is this embodiment, by way of a common intake passage 2A including an air cleaner 2, a surge tank 3 and independent intake passages 4a, 4b, 4c and 4d. The independent intake passages 4a, 4b, 4c and 4d are connected to cylinders 1a, 1b, 1c and 1d, respectively. In the embodiment shown in Figure 1, an air flow meter 5 is provided in the common intake passage 2A between the air cleaner 2 and the surge tank 3, and a throttle valve 6 is provided between the air flow meter 5 and the surge tank 3. As more explicitly shown in Figure 2, a fuel injection nozzle 7 is provided on each of the intake passages 4a to 4d.

The structure of the intake passages 4a to 4d the length of which are made variable according to this invention will be described in detail hereinbelow referring to Figures 2 to 5. In Figure 2, one of the intake passages 4a is illustrated and the description will be made with reference to this intake passage 4a only.

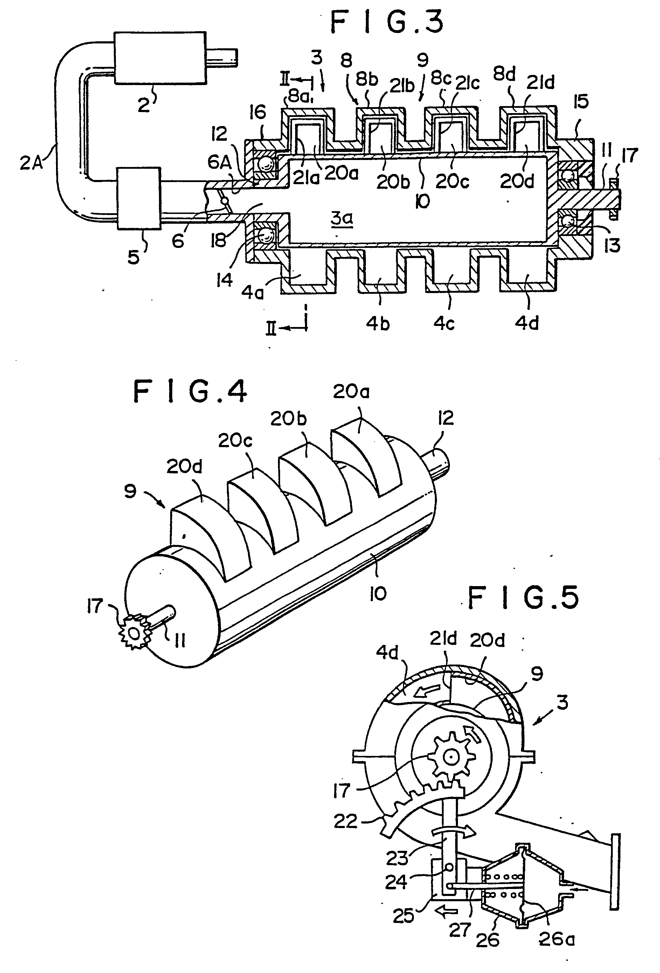

Referring to Figure 3, the surge tank 3 is provided with a rotatable sub-tank or passage length control member 9 (hereinafter referred to as "control drum") in a casing 8. The control drum 9, as best shown in Figure 4, has a cylindrical body 10 defining an internal space 3a communicated with the common intake passage 2A upstream the surge tank 3 and is provided at opposite ends with axle portions 11 and 12, one of which 11 has thereon a pinion 17 meshed with a control sector gear 22 described hereinafter. The cylindrical body 10 has on its periphery four expanded parts 20a, 20b, 20c and 20d having open ends 21a, 21b, 21c and 21d, respectively. The casing 8 of the surge tank 3 has four expanded sections 8a, 8b, 8c and 8d communicating with intake passages 4a, 4b, 4c and 4d, respectively, and slidably engaged with said expanded parts 20a, 20b, 20c and 20d of the cylindrical body 10 of the control drum 9.

The casing 8 further has support ends 15 and 16 which rotatably support said axle portions 11 and 12 of the control drum 9 by means of bearings 13 and 14 provided therein. The control drum 9 has an open end 18 at one of said axle portions 12, which is communicating with the throttle chamber 6A enclosing said throttle valve 6 in the common intake pasasge 2A.

Hence, the internal space 3a of the control drum 9 forms a substantial part of the surge tank 3 and connects the throttle chamber 6A of the common intake passage 2A with the intake passages 4a to 4d. The expanded parts 20a to 20d communicate with the intake passages 4a to 4d by way of the expanded sections 8a to 8d of the casing 8. By rotating the control drum 9 as shown by an arrow A about said axle portions 11 and 12 up to the position shown by chain line in Figure 2, the effective length of the intake passages 4a to 4d is varied.

As shown in Figure 5, the pinion 17 fixed at the axle portion 11 of the control drum 9 is engaged with a control sector gear 22 secured to an end of a lever 23 which is swingable about a pivot 24 provided on a support member 25. The other end of the lever 23 is connected with an end of a control rod 27 which in turn is connected at the other end thereof with a diaphragm member 26a of a diaphragm 26, which is communicating with a port of an exhaust passage 1A (Figure 2) of the engine 1.

Since the diaphragm 26 is connected with the exhaust passage 1A of the engine 1, the pressure sensed by the diaphragm 26 is increased when the engine speed is increased. That is, as the engine speed changes, the pressure sensed by the diaphragm 26 changes and the control rod 27 is moved back and forth to swing the lever 23 about said pivot 24. Hence, as the engine speed increases, the lever 23 is swung clockwise in Figure 5 and the pinion 17 is rotated counterclockwise, to rotate the control drum 9 counterclockwise which results in shortening of the intake passage 4d. By shortening the length of the intake passage 4d, the natural frequency of the intake system is synchronized with the frequency of the pressure wave caused by the reciprocal motion of the piston in the engine when the engine speed is increased. When the engine speed is lowered, the exhaust pressure sensed by the diaphragm 26 falls and the lever 23 is swung counterclockwise to rotate the pinion 17 and accordingly the control drum 9 clockwise, whereby the intake passage 4d is elongated or recovered to its original length to keep synchronization of the natural frequency of the intake system with the pressure wave resulting from the reciprocal motion of the piston.

### Claims

1. A variable length intake passage (3) for an internal combustion engine (1) having at least one cylinder (1a, 1b, 1c, 1d), said variable length intake passage extending between a common intake passage (2A) and said at least one cylinder (1a, 1b, 1c, 1d), said variable length intake passage (3) comprising:

a first tank member (8) having an axis, said first tank member (8) having an inlet and at least one outlet (4a, 4b, 4c, 4d), said inlet of said first tank member (8) connected to said common intake passage (2A) each said outlet (4a, 4b, 4c, 4d) of said first tank member (8) corresponding to a respective engine cylinder (1a, 1b, 1c, 1d) and connected to said respective engine cylinder (1a, 1b, 1c, 1d), each said outlet (4a, 4b, 4c, 4d) comprising a radially expanded portion (8a, 8b, 8c, 8d) of said first tank (8) disposed transverse to said axis and defining an arcuate fluid flow conduit of predetermined length;

a second tank member (9) having an axis, said second tank member (9) being rotatable about said axis and being coaxially enclosed within said first tank member (8) for rotation relative thereto, said second tank member (9) having an inlet (18) and at least one outlet (21a, 21b, 21c, 21d), said inlet (18) of said second tank member (9) being connected to said inlet of said first tank member (8), each said oulet (21, 21b, 21c, 21d) of said second tank member (9) corresponding to a respective outlet (4a, 4b, 4c, 4d) of said first tank member (8), each said outlet (21a, 21b, 21c, 21d) of said second tank (9) formed as a radially expanded portion (20a, 20b, 20c, 20d) of said second tank (9) disposed transverse to said axis and defining an arcuate fluid flow conduit of predetermined length, said outlet (21a, 21b, 21c, 21d) of said second tank (9) being of a length less than said outlet (4a, 4b, 4c, 4d) of said first tank (8), said outlet (21a, 21b, 21c, 21d) of said second tank (9) being slidably received within said expanded portion (8a, 8b, 8c, 8d) of said outlet (4a, 4b, 4c, 4d) of said first tank (8);

said first tank member (8) and said second tank member (9) being connected to each other by way of bearings (13, 14) at axle portions (11, 12);

rotation means (17) for rotating said second tank (9) about said axis relative to said first tank (8), whereby rotation of said second tank member (9) relative to said first tank member (8) varies the length of said intake passage (3) from said common intake passage (2A) to said cylinder (1a, 1b, 1c, 1d);

control means for controlling said rotation means (17) and, hence, the degree of rotation of said second tank member (9) relative to said first tank member (8) in response to engine speed, characterized in that

a) said second tank member (9) is completely surrounded by said first tank member (8) and said radially expanded portions (20a to 20d) of said second tank member (9) are loosely engaged with the corresponding radially expanded portions (8a to 8d) of said first tank member (8);

b) a throttle valve (6) is provided in said intake passage (3) upstream said first tank member (8), and

c) said control means comprises a diaphragm actuator means (26) adapted to drive said rotation means (17).

2. The variable length intake passage according to claim 1, wherein said diaphragm actuator means (26) communicates with an exhaust passage (1A) of said engine (1).

3. The variable length intake passage according to claim 2, wherein said diaphragm actuator means (26) is connected with a swingable lever (23) to swing the lever (23) according to the presure in the exhaust passage (1A) sensed by the diaphragm (26a) of said diaphragm actuator means (26), and the lever (23) is provided with a drive means (22) for rotating said second tank member (9) relative to said first tank member (8).

4. The variable length intake passage according to one of claims 1 to 3, wherein said throttle valve (6) is directly connected to said inlet of said first tank member (8).

5. The variable length intake passage according to one of claims 1 to 4, wherein an intake airflow metering means (5) is provided upstream of said throttle valve (6).

**Patentansprüche**

1. Ansaugkrümmer (3) mit variabler Länge für einen Verbrennungsmotor (1) mit zumindest einem Zylinder (1a, 1b, 1c, 1d), wobei sich der Ansaugkrümmer mit variabler Länge zwischen dem gemeinsamen Ansaugkrümmer (2A) und zumindest einem Zylinder (1a, 1b, 1c, 1d) erstreckt, wobei der Ansaugkrümmer (3) mit variabler Länge umfaßt:

ein erstes Kraftstoffbehälterteil (8) mit einer Achse, wobei dieses erste Kraftstoffbehälterteil (8) einen Einlaß und zumindest einen Auslaß (4a, 4b, 4c, 4d) aufweist, der Einlaß des ersten Kraftstoffbehälterteils (8) an den gemeinsamen Ansaugkrümmer (2A) verbunden ist, jeder Auslaß (4a, 4b, 4c, 4d) des ersten Kraftstoffbehälterteils (8) einem entsprechenden Motorzylinder (1a, 1b, 1c, 1d) entspricht und an den entsprechenden Motorcylinder (1a, 1b, 1c, 1d) verbunden ist, jeder Auslaß (4a, 4b, 4c, 4d) einen radial erweiterten Abschnitt (8a, 8b, 8c, 8d) des ersten Kraftstoffbehälters (8) umfaßt, der quer zur Achse angeordnet ist und eine gebogene Fluidströmungsleitung mit bestimmter Länge definiert, ein zweites Kraftstoffbehalterteil (8) mit einer Achse, wobei das zeite Kraftstoffbehälterteil (9) um diese Achse drehbar ist und koaxial im ersten Kraftstoffbehälterteil (8) eingeschlossen ist, um relativ zu diesem zu rotieren, wobei das zweite Kraftstoffbehälterteil (9) einen Einlaß (18) und zumindest einen Auslaß (21a, 21b, 21c, 21d) aufweist, der Einlaß (18) des zweiten Kraftstoffbehälterteils (9) an den Einlaß des ersten Kraftstoffbehälterteils (8) verbunden ist, jeder Auslaß (21a, 21b, 21c, 21d) des zweiten Kraftstoffbehälterteils (9) einem entsprechenden Auslaß (4a, 4b, 4c, 4d) des ersten Kraftstoffbehälterteils (8) entspricht, jeder Anslaß (21a, 21b, 21c, 21d) des zweiten Kraftstoffbehälters (9), der als radial erweiterter Abschnitt (20a, 20b, 20c, 20d) des zweiten Kraftstoffbehälters (9) ausgebildet ist, quer zur Achse angeordnet ist und eine gebogene Fluidströmungsleitung mit bestimmter Länge definiert, der Auslaß (21a, 21b, 21c, 21d) des zweiten Kraftstoffbehälters (9) von einer kleineren Länge als der Auslaß (4a, 4b, 4c, 4d) des ersten Kraftstoffbehälters (8), ist, der Auslaß (21a, 21b, 21c, 21d) des zweiten Kraftstoffbehälters (9) verschiebbar im erweiterten Abschnitt (8a, 8b, 8c, 8d) des Auslasses (4a, 4b, 4c, 4d) des ersten Kraftstoffbehälters (8) aufgenommen wird,

wobei das erste Kraftstoffbehälterteil (8) und das zweite Kraftstoffbehälterteil (9) durch Lager (13, 14) an Achsenabschnitte (11, 12) miteinander verbunden sind,

eine Rotationseinrichtung (17) zur Rotation des zweiten Kraftstoffbehälters (9) um die Achse, bezogen auf den ersten Kraftstoffbehälter (8), wobei die Rotation des zweiten Kraftstoffbehälterteils (9), bezogen auf das erste Kraftstoffbehälterteil (8), die Länge des Ansaugkrümmers (3) vom gemeinsamen Ansaugkrümmer (2A) zum Zylinder (1a, 1b, 1c, 1d) verändert,

eine Regeleinrichtung zur Regelung dieser Rotationseinrichtung (17) und folglich des Rotationsgrades des zweiten Kraftstoffbehälterteils (9), bezogen auf das erste Kraftstoffbehälterteil (8), entsprechend der Motorgeschwindigkeit, dadurch gekennzeichnet, daß

a) das zweite Kraftstoffbehälterteil (9) vom ersten Kraftstoffbehälterteil (8) vollständig umgeben wird und die radial erweiterten Abschnitte (20a bis 20d) des zweiten Kraftstoffbehälterteils (9) beweglich in die entsprechenden radial erweiterten Abschnitte (8a bis 8d) des ersten Kraftstoffbehälterteils (8) eingereifen,

b) im Ansaugkrümmer (3) stromaufwärts zum ersten Kraftstoffbehälterteil (8) ein Drosselventil (6) vorgesehen ist und

c) die Regeleinrichtung eine Membranstellantriebseinrichtung (26) darstellt, die für den Betrieb dieser Rotationseinrichutng (17) angepaßt ist.

2. Ansaugkrümmer mit variabler Länge nach Anspruch 1, worin die Membranstellantriebseinrichtung (26) mit dem Abgaskanal (1A) des Motors (1) in Verbindung steht.

3. Ansaugkrümmer mit variabler Länge nach Anspruch 2, worin die Membransteilantriebseinrichtung (26) mit einem schwenkbaren Hebel (23) verbunden ist, damit der Hebel (23) entsprechend dem Druck im Abgaskanal (1A) geschwenkt werden kann, der durch die Membran (26a) der Membranstellantriebseinrichtung (26) wahrgenommen wird, und der Hebel (23) mit einer Antriebseinrichtung (22) versehen ist, um das zweite Kraftstoffbehälterteil (9), bezogen auf das erste Kraftstoffbehälterteil (8), zu rotieren.

4. Ansaugkrümmer mit variabler Länge nach einem der Ansprüche 1 bis 3, worin das Drosselventil (6) direkt an den Einlaß des ersten Kraftstoffbehälterteils (8) verbunden ist.

5. Ansaugkrümmer mit variabler Länge nach einem der Ansprüche 1 bis 4, worin stromaufwärts zum Drosselventil (6) eine Dosiereinrichtung (5) für die angesaugte Luftströmung vorgesehen ist.

**Revendications**

1. Collecteur d'admission de longueur variable (3) pour un moteur à combustion interne (1) ayant au moins un cylindre (1a, 1b, 1c, 1d), ledit collecteur d'admission de longueur variable s'étendant entre un collecteur d'admission commun (2A) et lesdits cylindres (1a, 1b, 1c, 1d), ledit collecteur d'admission de longueur variable (3) comprenant:

un premier élément de réservoir (8) ayant un axe, ledit premier élément de réservoir (B) ayant une entrée et au moins une sortie (4a, 4b, 4c, 4d), ladite entrée dudit premier élément de réservoir (8) étant reliée audit collecteur d'admission commun (2A), chacune desdites sorties (4a, 4b, 4c, 4d) dudit premier élément de réservoir (8) correspondant à un cylindre de moteur respectif (1a, 1b, 1c, 1d) et étant reliée audit cylindre de moteur respectif (1a, 1b, 1c, 1d), chacune desdites sorties (4a, 4b, 4c, 4d) comprenant une partie élargie radialement (8a, 8b, 8c, 8d) dudit premier réservoir (8) placée de façon transversale audit axe et définissant un conduit d'écoulement de fluide courbe de longueur prédéterminée;

un second élément de réservoir (9) ayant un axe, ledit second élément de réservoir (9) pouvant tourner autour dudit axe et étant enfermé de façon coaxiale à l'intérieur dudit premier élément de réservoir (8) pour tourner par rapport à celui-ci, ledit second élément de réservoir (9) ayant une entrée (18) et au moins une sortie (21a, 21b, 21c, 21d), ladite entrée (18) dudit second élément de reservoir (9) étant reliée à ladite entrée dudit premier élément de réservoir (8), chacune desdites sorties (21a, 21b, 21c, 21d) dudit second élément de réservoir (9) correspondant à une sortie respective (4a, 4b, 4c, 4d) dudit premier élément de réservoir (8), chacune desdites sorties (21a, 21b, 21c, 21d) dudit second reservoir (9) étant formée comme une partie élargie radialement (20a, 20b, 20c, 20d) dudit second reservoir (9) placée de façon transversale audit axe et définissant un conduit d'écoulement de fluide courbe de longueur prédéterminée, ladite sortie (21a, 21b, 21c, 21d) dudit second réservoir (9) étant d'une longueur inférieure à ladite sortie (4a, 4b, 4c, 4d) dudit premier réservoir (8), ladite sortie (21a, 21b, 21c, 21d) dudit second réservoir (9) étant reçue de façon coulissante à l'intérieur de ladite partie élargie (8a, 8b, 8c, 8d) de ladite sortie (4a, 4b, 4c, 4d) dudit premier réservoir (8);

ledit premier élément de réservoir (8) et ledit second élément de réservoir (9) étant reliée l'un à l'autre au moyen de paliers (13, 14) au niveau de parties d'axe (11, 12);

des moyens de rotation (17) pour faire tourner ledit second réservoir (9) autour dudit axe par rapport audit premier reservoir (8), de sorte que la rotation dudit second élément de réservoir (9) par rapport audit premier élément de réservoir (8) fait varier la longueur dudit collecteur d'admission (3) depuis ledit collecteur d'admission commun (2A) audit cylindre (1a, 1b, 1c, 1d);

des moyens de commande pour commander lesdits moyens de rotation (19) et, donc, le degré de rotation dudit second élément de réservoir (9) par rapport audit premier élément de réservoir (8) en réponse à la vitesse du moteur, caractérisé en ce que

a) ledit second élément de réservoir (9) est complètement entouré par ledit premier élément de réservoir (8) et lesdites parties élargies radialement (20a à 20d) dudit second élément de réservoir (9) sont en contact glissant avec les parties correspondantes élargies radialement (8a à 8d) dudit premier élément de réservoir (8);

b) une soupape d'étranglement (6) est prévue dans ledit collecteur d'admission (3) en amont dudit premier élément de réservoir (8), et

c) lesdits moyens de commande comprennent des moyens d'actionnement de diaphragme (26) adaptés pour actionner lesdits moyens de rotation (17).

2. Collecteur d'admission de longueur variable selon la revendication 1, dans lequel lesdits moyens d'actionnement de diaphragme (26) communiquent avec un passage d'échappement (1A) dudit moteur (1).

3. Collecteur d'admission de longueur variable selon la revendication 2, dans lequel lesdits moyens d'actionnement de diaphragme (26) sont reliés à un levier pivotant (23) pour faire pivoter le levier (23) selon la revendication dans le passage d'échappement (1A) captée par le diaphragme (26a) desdits moyens d'actionnement de diaphragme (26), et où le levier (23) est équipé de moyens de commande (22) pour faire tourner ledit second élément de réservoir (9) par rapport audit premier élément de réservoir (8).

4. Collecteur d'admission de longueur variable selon l'une des revendications 1 à 3, dans lequel ladite soupape d'étranglement (8) est directement reliée à ladite entrée dudit premier élément de réservoir (8).

5. Collecteur d'admission de longueur variable selon l'une des revendications 1 à 4, dans lequel des moyens de comptage d'écoulement d'air d'aspiration (5) sont prévus en amont de ladite soupape d'étranglement (6).

# F I G .1

AIR CLEANER

AIR FLOW METER

SURGE TANK

# F I G .2

# F I G.3

# F I G.4

# F I G.5